# DEMANDE DE BREVET EUROPEEN

(11) **EP 4 470 998 A1**
(43) Date de publication de la demande: **04.12.2024**
(21) Numéro de dépôt: 24176769.8
(22) Date de dépôt: 17.05.2024
(51) Int. Cl.: C05F 17/914

(54) **COMPOSTEUR GRUTABLE**

(30) Priorité: 31.05.2023 FR 2305432
(71) Demandeur: Complementerre 38, 38114 Oz en Oisans (FR)
(72) Inventeur: DECASTIAUX, Simon, 38114 OZ EN OISANS (FR)
(74) Mandataire: INNOV-GROUP

(57) **Abrégé**

Composteur (1), comportant :
- une armature (2) métallique, comprenant :
des montants (20),
des traverses latérales inférieures (21) et des traverses latérales supérieures (22), reliant les montants (20) entre eux ;

- des panneaux de bois (3), montés sur l'armature (2) métallique ;
- des moyens de préhension (4), agencés sur l'armature (2) métallique de manière à autoriser un grutage du composteur (1).

## Description

### Domaine technique

L'invention se rapporte au domaine technique des composteurs.

L'invention trouve notamment son application dans la gestion des biodéchets.

### État de l'art

Le compostage est une pratique écologique consistant à décomposer (on parle également de réduire ou dégrader) naturellement des déchets organiques via des micro-organismes tels que des bactéries, des champignons ou des vers. Le produit obtenu, appelé compost, peut alors former un amendement organique riche en nutriments pour les sols.

Un premier système de collecte de déchets organiques, connu de l'état de la technique, est un bac roulant en plastique. Un tel premier système de collecte n'est pas entièrement satisfaisant dans la mesure où son nettoyage doit être extrêmement fréquent (deux à trois fois par semaine), ce qui entraîne une forte consommation d'eau. Un tel bac en plastique ne permet pas d'initier un processus de fermentation efficace en raison d'un volume réduit. Le manque d'air conduit à un pourrissement des déchets, plutôt qu'à une fermentation. De plus, le transport de tels systèmes de collecte nécessite un camion étanche en raison d'une phase liquide abondante généralement présente dans le bac. Enfin, un tel système de collecte est classiquement sujet à des problèmes d'odeurs nauséabondes et d'infestation d'insectes, surtout en période estivale.

Un deuxième système de collecte de déchets organiques, connu de l'état de la technique comporte plusieurs bacs en bois destinés au compostage collectif. Un premier bac en bois est prévu pour le dépôt, un deuxième bac en bois est prévu pour la maturation des déchets, et un troisième bac en bois est prévu pour le stockage de broyats. Un tel système de collecte n'est pas entièrement satisfaisant en raison des difficultés de manutention. En effet, un premier vidage à la pelle et à la fourche du premier bac est nécessaire pour transvaser le compost dans le deuxième bac de maturation. Ensuite, un deuxième vidage manuel doit être effectué pour sortir le compost maturé. Enfin, la présence de plusieurs bacs peut générer une surface occupée au sol importante.

### Exposé de l'invention

L'invention vise à remédier en tout ou partie aux inconvénients précités. A cet effet, l'invention a pour objet un composteur, comportant :
- une armature métallique, comprenant :
   des montants,
   des traverses latérales inférieures et des traverses latérales supérieures, reliant les montants entre eux ;
- des panneaux de bois, montés sur l'armature métallique ;
- des moyens de préhension, agencés sur l'armature métallique de manière à autoriser un grutage du composteur.

Ainsi, un tel composteur selon l'invention permet de transvaser facilement le compost du composteur vers une benne de camion, grâce à l'armature métallique et aux moyens de préhension, contrairement à un bac en bois classique. Plus précisément, le grutage du composteur est possible grâce à la combinaison de l'armature métallique et des moyens de préhension, ce qui permet de s'affranchir des difficultés de manutention de l'état de la technique. L'armature métallique assure une stabilité et une résistance mécanique, tandis que les moyens de préhension assurent la capacité de saisir le composteur en vue de son levage. Le grutage de composteurs classiques en bois est tout simplement impossible dans l'état de la technique, en l'absence de moyens de préhension et de résistance mécanique suffisante en cas de levage.

En outre, les panneaux de bois facilitent une dégradation aérobie des déchets organiques, ce qui réduit la phase liquide en raison d'une meilleure fermentation. Par conséquent, les bennes de camion n'ont pas de contrainte d'étanchéité pour le transport du compost issu d'un composteur selon l'invention, contrairement au compost provenant de bacs roulants en plastique de l'état de la technique. De plus, la fréquence de collecte du compost est réduite par rapport aux bacs roulants en plastique. La meilleure dégradation aérobie des déchets organiques, grâce aux panneaux de bois, permet d'envisager 10 à 12 collectes par an au lieu de 52 à 100 collectes par an avec les bacs roulants en plastique.

Le composteur selon l'invention peut comporter une ou plusieurs des caractéristiques suivantes.

Selon une caractéristique de l'invention, l'armature métallique comprend une traverse centrale reliant deux traverses latérales supérieures entre elles.

Ainsi, un avantage procuré est d'améliorer la stabilité et la résistance mécanique du composteur en vue de son grutage.

Selon une caractéristique de l'invention, les moyens de préhension sont agencés sur la traverse centrale.

Ainsi, un avantage procuré est d'améliorer la sécurité du grutage du composteur en conservant un équilibre du composteur pendant son levage. Les risques de basculement ou de déformation du composteur sont alors fortement réduits.

Selon une caractéristique de l'invention, l'armature métallique et la traverse centrale délimitent un volume de réception de déchets, le composteur comportant un panneau monté pivotant sur la traverse centrale entre :
- une position de fermeture, dans laquelle le panneau interdit un accès au volume de réception ;
- une position d'ouverture, dans laquelle le panneau libère un accès au volume de réception.

Ainsi, un avantage procuré est de faciliter l'accès à l'intérieur du composteur, par exemple pour ajouter de nouveaux déchets organiques, manipuler les déchets organiques (e.g. ajout d'eau ou de matières sèches), faciliter la circulation de l'air au sein du composteur, contrôler le niveau d'humidité au sein du composteur, faciliter la maintenance du composteur etc.

Selon une caractéristique de l'invention, le panneau est métallique, de préférence réalisé en aluminium, le panneau métallique en position de fermeture formant un couvercle étanche avec l'armature métallique.

Ainsi, un avantage procuré est la légèreté d'un tel couvercle par rapport à un couvercle en bois, ce qui facilite l'ouverture du couvercle pour les usagers.

Selon une caractéristique de l'invention, le composteur comporte un système de frein de chute, agencé pour freiner un déplacement du panneau de la position d'ouverture vers la position de fermeture, le système de frein de chute étant de préférence un système hydraulique ou un système d'aimantation.

Ainsi, un avantage procuré est de sécuriser l'utilisateur du composteur en évitant une fermeture brusque du panneau qui pourrait occasionner des blessures accidentelles, tout particulièrement lorsque le panneau est lourd (e.g. panneau en bois). Un autre avantage du système de frein de chute est de limiter les nuisances sonores qui pourraient être générées lors de la fermeture brusque d'un panneau métallique (e.g. panneau en aluminium). Par ailleurs, un tel système de frein de chute permet de prolonger la durée de vie du mécanisme d'ouverture/fermeture du panneau monté pivotant sur la traverse centrale.

Selon une caractéristique de l'invention, les moyens de préhension comportent au moins un système de préhension choisi parmi :
- un anneau de levage, conçu pour coopérer avec un crochet ;
- un double anneau de levage, conçu pour coopérer avec une pince ;
- un système à champignon, conçu pour coopérer avec une pince.

Ainsi, un avantage procuré par de tels systèmes de préhension est leur polyvalence, ce qui facilite leur intégration au composteur.

Selon une caractéristique de l'invention, les panneaux de bois présentent chacun une épaisseur comprise entre 10 mm et 25 mm, de préférence comprise entre 15 mm et 20 mm.

Ainsi, un avantage procuré par une telle gamme d'épaisseurs est d'optimiser le processus de fermentation au sein du composteur en conférant une excellent isolation thermique.

Selon une caractéristique de l'invention, le composteur comporte une trappe montée sur l'armature métallique autour d'un axe de pivotement, entre :
- une position de fermeture, dans laquelle la trappe forme un fond étanche avec l'armature métallique ;
- une position d'ouverture, dans laquelle la trappe forme une ouverture avec l'armature métallique.

Ainsi, un avantage procuré est d'obtenir un déchargement rapide et efficace du compost dans une benne de camion.

Selon une caractéristique de l'invention, le composteur comporte des moyens de verrouillage, agencés pour verrouiller la trappe dans la position de fermeture ; les moyens de verrouillage comprenant :
- une tige longitudinale, montée sur l'armature métallique ;
- des crochets, montés pivotants autour de la tige longitudinale entre une position de verrouillage dans laquelle la trappe est maintenue dans la position de fermeture, et une position de déverrouillage dans laquelle la trappe est libérée de la position de fermeture ;
- une barre de stabilisation, agencée pour relier les crochets entre eux.

Ainsi, un avantage procuré par de tels moyens de verrouillage est de conférer une excellente sécurité en évitant une ouverture intempestive de la trappe lors du grutage du composteur, en cas de secousses ou de fortes vibrations. En particulier, la barre de stabilisation permet d'accroître la résistance mécanique du composteur afin de lutter principalement contre les forces externes s'exerçant sur le composteur lors de son grutage.

Selon une caractéristique de l'invention :
- la tige longitudinale est montée sur l'armature métallique entre deux montants séparés d'une distance ;
- la barre de stabilisation s'étend sur une longueur égale à la distance séparant lesdits deux montants.

Ainsi, un avantage procuré par une telle longueur pour la barre de stabilisation est d'accroître la résistance mécanique du composteur afin de lutter principalement contre les forces externes s'exerçant sur le composteur lors de son grutage.

Selon une caractéristique de l'invention, la trappe est munie d'au moins un bac de rétention, agencé pour retenir une phase liquide lorsque la trappe est déplacée de la position de fermeture vers la position d'ouverture.

Ainsi, un avantage procuré est d'améliorer le contrôle des déversements liquides indésirables lors du transvasement du compost dans une benne de camion.

Selon une caractéristique de l'invention, les traverses latérales inférieures comportent des première et seconde traverses latérales inférieures opposées ; le composteur comportant des premiers et seconds pieds agencés respectivement sous les première et seconde traverses latérales inférieures opposées.

Ainsi, un avantage procuré est de surélever le composteur afin d'éviter un contact direct avec le sol, ce qui permet de protéger les surfaces, et d'améliorer la circulation de l'air au sein du composteur.

Selon une caractéristique de l'invention, les première et seconde traverses latérales inférieures opposées, sous lesquelles sont agencés les premiers et seconds pieds, s'étendent chacune suivant un axe longitudinal perpendiculaire à l'axe de pivotement autour duquel est montée la trappe.

Ainsi, un avantage procuré est d'éviter une dégradation des pieds (risque d'arrachage) lors de l'ouverture répétée de la trappe.

Selon une caractéristique de l'invention, le composteur comporte un bac de réserve à broyat monté sur l'armature métallique.

Ainsi, un avantage procuré est d'incorporer le bac de réserve à broyat au sein du composteur, et d'éviter par là-même des déplacements et manipulations supplémentaires de l'usager pour atteindre un bac de réserve à broyat, transporter le broyat et l'introduire dans le composteur. L'apport de broyat dans un processus de compostage permet notamment un équilibre de la matière organique, en apportant un matériau carboné aux déchets organiques qui sont généralement riches en azote. En outre, le broyat joue un rôle important dans le contrôle de l'humidité au sein du composteur en absorbant l'excès d'humidité.

### Définitions

- Par « composteur », on entend un conteneur conçu pour faciliter le processus de compostage de déchets organiques, c'est-à-dire le processus biologique naturel de décomposition des déchets organiques.
- Par « armature métallique », on entend une structure métallique conçue pour soutenir les différents éléments du composteur de manière à apporter une stabilité et une résistance mécanique permettant un grutage sécurisé du composteur.
- Par « préhension », on entend une capacité de saisir, tenir, manipuler le composteur en vue de son grutage.
- Par « grutage », on entend les opérations de levage, déplacement, et manutention du composteur à l'aide d'une grue, afin de verser le compost à l'intérieur d'une benne de camion en vue de son transport.

### Brève description des dessins

D'autres caractéristiques et avantages apparaîtront dans l'exposé détaillé de différents modes de réalisation de l'invention, l'exposé étant assorti d'exemples et de références aux dessins joints.

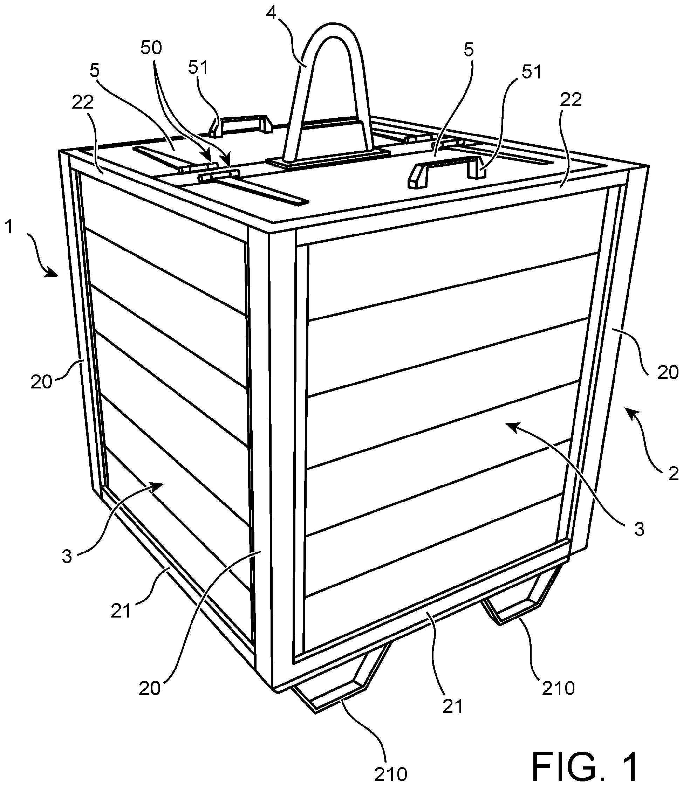

Figure 1 est une vue schématique en perspective, illustrant un composteur selon l'invention.

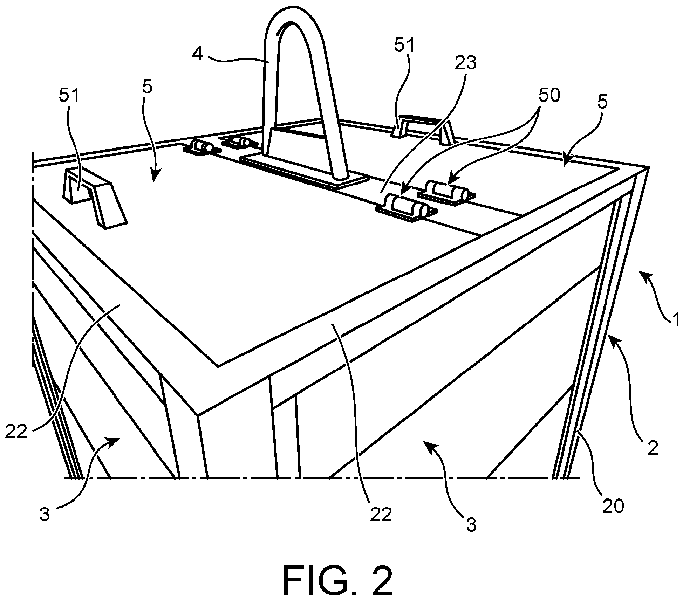

Figure 2 est une vue schématique en perspective de dessus, à l'échelle agrandie, d'un composteur selon l'invention.

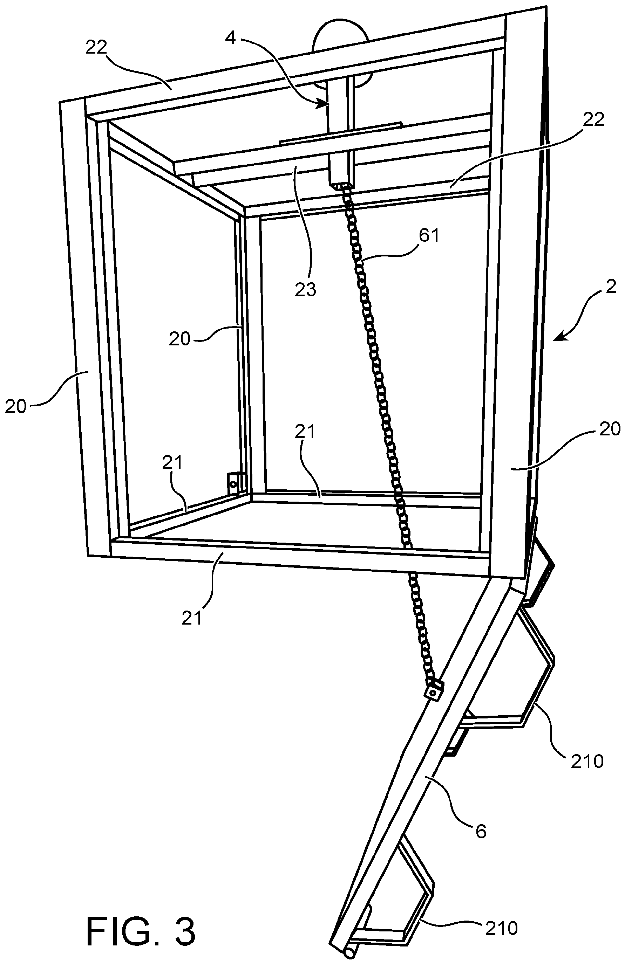

Figure 3 est une vue schématique en perspective, illustrant une armature métallique d'un composteur selon l'invention, en l'absence de panneaux de bois, et munie d'une trappe.

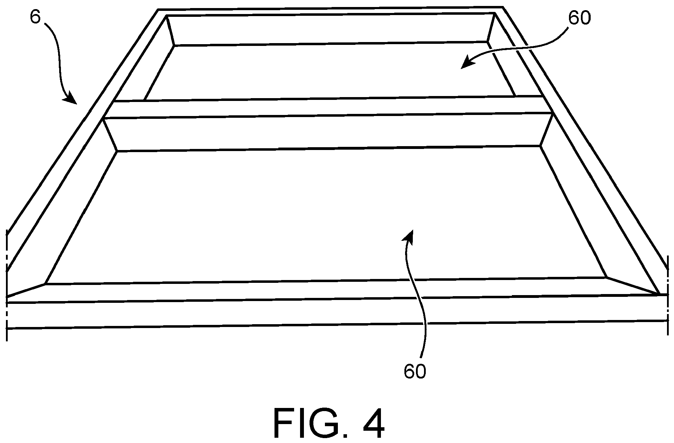

Figure 4 est une vue schématique en perspective, illustrant deux bacs de rétention équipant une trappe.

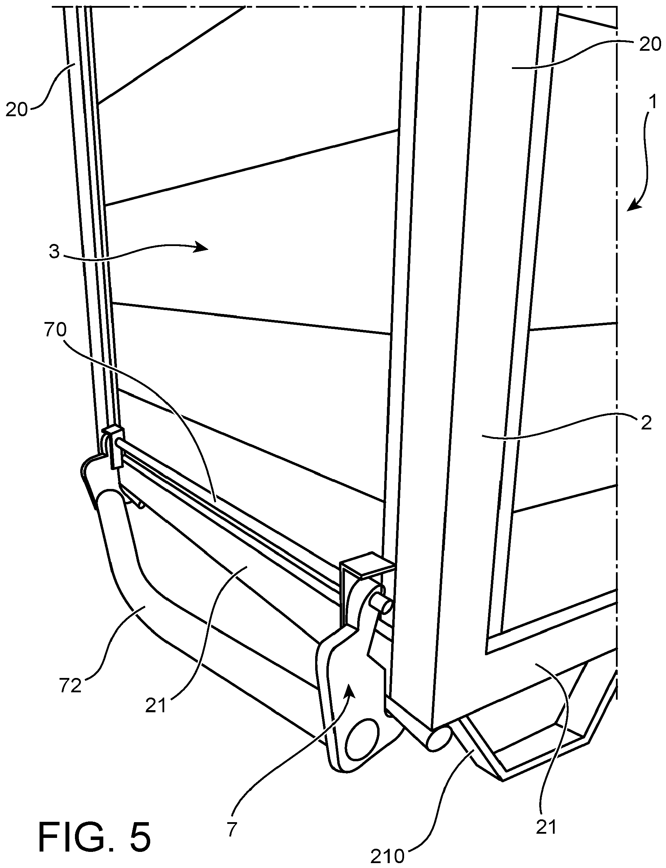

Figure 5 est une vue schématique en perspective de côté, illustrant des moyens de verrouillage de la trappe dans la position de fermeture.

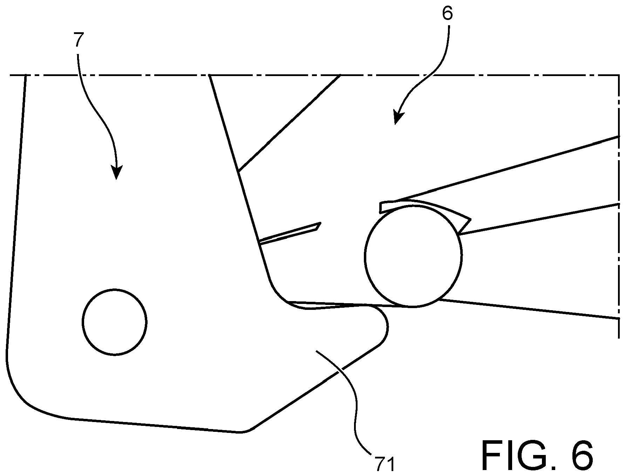

Figure 6 est une vue schématique en perspective de côté, à l'échelle agrandie, d'un crochet équipant des moyens de verrouillage de la trappe dans la position de fermeture.

Il est à noter que les dessins décrits ci-avant sont schématiques, et ne sont pas nécessairement à l'échelle par souci de lisibilité et pour en simplifier leur compréhension.

### Exposé détaillé des modes de réalisation

Les éléments identiques ou assurant la même fonction porteront les mêmes références pour les différents modes de réalisation, par souci de simplification.

Un objet de l'invention est un composteur 1, comportant :
- une armature 2 métallique, comprenant :
   des montants 20,
   des traverses latérales inférieures 21 et des traverses latérales supérieures 22, reliant les montants 20 entre eux ;
- des panneaux de bois 3, montés sur l'armature 2 métallique ;
- des moyens de préhension 4, agencés sur l'armature 2 métallique de manière à autoriser un grutage du composteur 1.

### Armature métallique

L'armature 2 métallique comprend des montants 20. Les montants 20 sont métalliques, de préférence réalisé dans un acier, plus préférentiellement dans un acier galvanisé à chaud. Plus précisément, l'armature 2 métallique comprend quatre montants 20, s'étendant chacun suivant un axe vertical. Les montants 20 peuvent être réalisés sous la forme de tubes ou de profilés.

L'armature 2 métallique comprend des traverses latérales inférieures 21 et des traverses latérales supérieures 22, reliant les montants 20 entre eux. Les traverses latérales inférieures 21 et les traverses latérales supérieures 22 sont métalliques. Plus précisément, l'armature 2 métallique comprend quatre traverses latérales inférieures 21 et quatre traverses latérales supérieures 22. Les traverses latérales inférieures 21 et les traverses latérales supérieures 22 s'étendent chacune suivant un axe horizontal. Les traverses latérales inférieures 21 et les traverses latérales supérieures 22 peuvent être réalisés sous la forme de tubes ou de profilés.

L'armature 2 métallique comprend avantageusement une traverse centrale 23 reliant deux traverses latérales supérieures 22 entre elles. La traverse centrale 23 est métallique. L'armature 2 métallique et la traverse centrale 23 délimitent un volume de réception de déchets. La traverse centrale 23 peut être réalisée sous la forme d'un tube ou d'un profilé. La traverse centrale 23 s'étend de préférence perpendiculairement aux deux traverses latérales supérieures 22 qu'elle relie.

L'armature métallique 2 est avantageusement munie de cannelures (e.g. rainures ou fentes) agencées pour faciliter la ventilation et la circulation de l'air à travers le composteur 1.

### Panneaux de bois

Le composteur 1 comporte des panneaux de bois 3, montés sur l'armature 2 métallique. Les panneaux de bois 3 présentent avantageusement chacun une épaisseur comprise entre 10 mm et 25 mm, de préférence comprise entre 15 mm et 20 mm.

A titre d'exemple non limitatif, les panneaux de bois 3 peuvent être réalisés en pin du Nord, de préférence étuvé. D'autres types de bois sont envisageables, par exemple des panneaux de bois 3 en douglas peuvent être utilisés. Ces panneaux de bois 3 peuvent être fabriqués à partir du bois de l'espèce de conifère connue sous le nom de douglas (également appelé sapin de Douglas).

### Moyens de préhension

Le composteur 1 comporte des moyens de préhension 4, agencés sur l'armature 2 métallique de manière à autoriser un grutage du composteur 1.

Les moyens de préhension 4 comportent avantageusement au moins un système de préhension choisi parmi :
- un anneau de levage, conçu pour coopérer avec un crochet ;
- un double anneau de levage, conçu pour coopérer avec une pince ;
- un système à champignon, conçu pour coopérer avec une pince.

En particulier, le système à champignon coopérant avec une pince est connu de l'homme du métier, et est par exemple commercialisé par la société KINSHOFER.

Les moyens de préhension 4 sont avantageusement agencés sur la traverse centrale 23. Selon une alternative, les moyens de préhension 4 peuvent être agencés aux quatre coins supérieurs de l'armature 2 métallique, c'est-à-dire aux quatre sommets des montants 20. A titre d'exemple non limitatif, les moyens de préhension 4 peuvent comporter quatre anneaux de levage agencés aux quatre coins supérieurs de l'armature 2 métallique.

### Panneau pivotant

Le composteur 1 comporte avantageusement un panneau 5 monté pivotant sur la traverse centrale 23 entre :
- une position de fermeture, dans laquelle le panneau 5 interdit un accès au volume de réception ;
- une position d'ouverture, dans laquelle le panneau 5 libère un accès au volume de réception.

Le panneau 5 peut être monté pivotant sur la traverse centrale 23 à l'aide de charnières 50. Le panneau 5 peut être saisi à l'aide d'une poignée 51.

Le composteur 1 peut comporter deux panneaux 5 montés pivotants sur la traverse centrale 23 entre :
- une position de fermeture, dans laquelle le panneau 5 correspondant interdit un accès au volume de réception ;
- une position d'ouverture, dans laquelle le panneau 5 correspondant libère un accès au volume de réception.

Selon un premier mode de réalisation, le ou chaque panneau 5 est métallique, de préférence réalisé en aluminium. Le panneau 5 métallique en position de fermeture forme avantageusement un couvercle étanche avec l'armature 2 métallique.

Selon un deuxième mode de réalisation, le ou chaque panneau 5 monté pivotant sur la traverse centrale 23 est réalisé en bois.

Le composteur 1 comporte avantageusement un système de frein de chute (non illustré), agencé pour freiner un déplacement du panneau 5 de la position d'ouverture vers la position de fermeture. Le système de frein de chute est de préférence un système hydraulique ou un système d'aimantation. On privilégiera un système hydraulique de frein de chute pour un panneau 5 métallique, et un système d'aimantation de frein de chute pour un panneau 5 en bois. Un système hydraulique de frein de chute comporte un piston qui est agencé à l'intérieur d'un cylindre hydraulique. Le piston est fixé au panneau 5 et se déplace dans le cylindre hydraulique lorsque le panneau 5 est soulevé ou abaissé. Lorsque le panneau 5 est soulevé, une huile hydraulique est pompée dans le cylindre hydraulique, créant une pression qui maintient en position le piston et par là-même le panneau 5. La quantité d'huile hydraulique pompée peut être régulée à l'aide d'une soupape de contrôle de manière à contrôler la pression hydraulique. Lorsque le panneau 5 est relâché, une soupape de décharge permet à l'huile hydraulique de s'échapper du cylindre hydraulique à un débit contrôlé, ce qui permet au panneau 5 de descendre lentement et en toute sécurité. A titre d'exemple non limitatif, un système d'aimantation de frein de chute comporte au moins un premier aimant monté sur le panneau 5 et au moins un deuxième aimant monté sur l'armature 2 métallique, les premier et deuxième aimants étant agencés pour se repousser mutuellement lorsque le panneau 5 se rapproche de la position de fermeture.

### Trappe

Le composteur 1 comporte avantageusement une trappe 6 montée sur l'armature 2 métallique autour d'un axe de pivotement, entre :
- une position de fermeture, dans laquelle la trappe 6 forme un fond étanche avec l'armature 2 métallique ;
- une position d'ouverture, dans laquelle la trappe 6 forme une ouverture avec l'armature 2 métallique.

Le composteur 1 comporte avantageusement des moyens de verrouillage 7, agencés pour verrouiller la trappe 6 dans la position de fermeture. Les moyens de verrouillage 7 comprennent avantageusement :
- une tige 70 longitudinale, montée sur l'armature 2 métallique ;
- des crochets 71, montés pivotants autour de la tige 70 longitudinale entre une position de verrouillage dans laquelle la trappe 6 est maintenue dans la position de fermeture, et une position de déverrouillage dans laquelle la trappe 6 est libérée de la position de fermeture ;
- une barre 72 de stabilisation, agencée pour relier les crochets 71 entre eux.

La tige 70 longitudinale est montée sur l'armature 2 métallique entre deux montants 20 séparés d'une distance. La barre 72 de stabilisation s'étend avantageusement sur une longueur égale à la distance séparant lesdits deux montants 20. Par « égale à la distance », on entend une tolérance à ± 10% de la distance. La barre 72 de stabilisation n'est pas nécessairement rectiligne et peut présenter une zone centrale en forme de « V ».

La trappe 6 est avantageusement munie d'au moins un bac 60 de rétention, agencé pour retenir une phase liquide lorsque la trappe 6 est déplacée de la position de fermeture vers la position d'ouverture. Le ou chaque bac 60 de rétention s'étend avantageusement suivant une direction longitudinale correspondant à l'axe d'écoulement de la phase liquide lorsque la trappe 6 est déplacée de la position de fermeture vers la position d'ouverture.

Une chaîne 61 peut être fixée à la trappe 6 pour déplacer la trappe 6 de la position d'ouverture vers la position de fermeture. A cet effet, la chaîne 61 peut être reliée au système à champignon ou à un treuil motorisé.

### Pieds

Les traverses latérales inférieures 21 comportent des première et seconde traverses latérales inférieures 21 opposées. Le composteur 1 comporte avantageusement des premiers et seconds pieds 210 agencés respectivement sous les première et seconde traverses latérales inférieures 21 opposées.

Les première et seconde traverses latérales inférieures 21 opposées, sous lesquelles sont agencés les premiers et seconds pieds 210, s'étendent avantageusement chacune suivant un axe longitudinal perpendiculaire à l'axe de pivotement autour duquel est montée la trappe 6.

### Bac de réserve à broyat

Le composteur 1 comporte avantageusement au moins un bac de réserve à broyat (non illustré) monté sur l'armature 2 métallique. Plus précisément, le bac de réserve à broyat est monté sur l'armature 2 métallique de manière à s'étendre en dehors du volume de réception délimité par l'armature 2 métallique. Le composteur 1 peut comporter deux bacs de réserve à broyat montés sur l'armature 2 métallique, et s'étendant sur deux faces opposées du composteur 1, de manière à conserver un équilibre du composteur 1. Les faces du composteur 1 sont formées par les panneaux de bois 3 montés sur l'armature 2 métallique. A titre d'exemple non limitatif, le ou chaque bac de réserve à broyat peut avoir une contenance de 100 litres à 150 litres. Le ou chaque bac de réserve à broyat est avantageusement muni d'un couvercle permettant notamment une protection contre les éléments extérieurs (e.g. pluie, neige, vent etc.).

Un broyat pour compost est un matériau organique, généralement obtenu à partir de déchets de bois, qui est broyé en petits morceaux afin d'accélérer le processus de décomposition et de favoriser la formation d'un compost de qualité.

L'invention ne se limite pas aux modes de réalisation exposés. L'homme du métier est mis à même de considérer leurs combinaisons techniquement opérantes, et de leur substituer des équivalents.

## Revendications

1. Composteur (1), comportant :
- une armature (2) métallique, comprenant :
des montants (20), s'étendant chacun suivant un axe vertical ;
des traverses latérales inférieures (21) et des traverses latérales supérieures (22), reliant les montants (20) entre eux ;
une traverse centrale (23) reliant deux traverses latérales supérieures (22) entre elles ;
- des panneaux de bois (3), montés sur l'armature (2) métallique ;
- des moyens de préhension (4), agencés sur la traverse centrale (23) de l'armature (2) métallique de manière à autoriser un grutage du composteur (1).

2. Composteur (1) selon la revendication 1, dans lequel l'armature (2) métallique et la traverse centrale (23) délimitent un volume de réception de déchets, le composteur (1) comportant un panneau (5) monté pivotant sur la traverse centrale (23) entre :
- une position de fermeture, dans laquelle le panneau (5) interdit un accès au volume de réception ;
- une position d'ouverture, dans laquelle le panneau (5) libère un accès au volume de réception.

3. Composteur (1) selon la revendication 2, dans lequel le panneau (5) est métallique, de préférence réalisé en aluminium, le panneau (5) métallique en position de fermeture formant un couvercle étanche avec l'armature (2) métallique.

4. Composteur (1) selon la revendication 2 ou 3, comportant un système de frein de chute, agencé pour freiner un déplacement du panneau (5) de la position d'ouverture vers la position de fermeture, le système de frein de chute étant de préférence un système hydraulique ou un système d'aimantation.

5. Composteur (1) selon l'une des revendications 1 à 4, dans lequel les moyens de préhension (4) comportent au moins un système de préhension choisi parmi :
- un anneau de levage, conçu pour coopérer avec un crochet ;
- un double anneau de levage, conçu pour coopérer avec une pince ;
- un système à champignon, conçu pour coopérer avec une pince.

6. Composteur (1) selon l'une des revendications 1 à 5, dans lequel les panneaux de bois (3) présentent chacun une épaisseur comprise entre 10 mm et 25 mm, de préférence comprise entre 15 mm et 20 mm.

7. Composteur (1) selon l'une des revendications 1 à 6, comportant une trappe (6) montée sur l'armature (2) métallique autour d'un axe de pivotement, entre :
- une position de fermeture, dans laquelle la trappe (6) forme un fond étanche avec l'armature (2) métallique ;
- une position d'ouverture, dans laquelle la trappe (6) forme une ouverture avec l'armature (2) métallique.

8. Composteur (1) selon la revendication 7, comportant des moyens de verrouillage (7), agencés pour verrouiller la trappe (6) dans la position de fermeture ; les moyens de verrouillage (7) comprenant :
- une tige (70) longitudinale, montée sur l'armature (2) métallique ;
- des crochets (71), montés pivotants autour de la tige (70) longitudinale entre une position de verrouillage dans laquelle la trappe (6) est maintenue dans la position de fermeture, et une position de déverrouillage dans laquelle la trappe (6) est libérée de la position de fermeture ;
- une barre (72) de stabilisation, agencée pour relier les crochets (71) entre eux.

9. Composteur (1) selon la revendication 8, dans lequel :
- la tige (70) longitudinale est montée sur l'armature (2) métallique entre deux montants (20) séparés d'une distance ;
- la barre (71) de stabilisation s'étend sur une longueur égale à la distance séparant lesdits deux montants (20).

10. Composteur (1) selon l'une des revendications 7 à 9, dans laquelle la trappe (6) est munie d'au moins un bac (60) de rétention, agencé pour retenir une phase liquide lorsque la trappe (6) est déplacée de la position de fermeture vers la position d'ouverture.

11. Composteur (1) selon l'une des revendications 1 à 10, dans lequel les traverses latérales inférieures (21) comportent des première et seconde traverses latérales inférieures (21) opposées ; le composteur (1) comportant des premiers et seconds pieds (210) agencés respectivement sous les première et seconde traverses latérales inférieures (21) opposées.

12. Composteur (1) selon la revendication 11 en combinaison avec la revendication 7, dans lequel les première et seconde traverses latérales inférieures (21) opposées, sous lesquelles sont agencés les premiers et seconds pieds (210), s'étendent chacune suivant un axe longitudinal perpendiculaire à l'axe de pivotement autour duquel est montée la trappe (6).

13. Composteur (1) selon l'une des revendications 1 à 12, comportant un bac de réserve à broyat monté sur l'armature (2) métallique.
